(19) 

Europäisches
Patentamt
European
Patent Office
Office européen
des brevets

(11) **EP 3 988 616 A1**

(12) **EUROPEAN PATENT APPLICATION**
published in accordance with Art. 153(4) EPC

(43) Date of publication:
**27.04.2022 Bulletin 2022/17**

(21) Application number: **20826042.2**

(22) Date of filing: **09.04.2020**

(51) International Patent Classification (IPC):
**C08L 27/18** (2006.01)    **C08J 5/18** (2006.01)
**C09J 7/20** (2018.01)    **B29D 7/00** (2006.01)
**B29L 7/00** (2006.01)    **B29C 67/04** (2017.01)
**B29C 43/46** (2006.01)    **B23Q 15/08** (2006.01)
**B29C 55/02** (2006.01)

(52) Cooperative Patent Classification (CPC):
**B23Q 15/08; B29C 43/46; B29C 55/02;**
**B29C 67/04; B29D 7/00; B29D 7/01; C08J 5/18;**
**C08L 27/18; C09J 7/20; C09J 7/24**

(86) International application number:
**PCT/CN2020/083896**

(87) International publication number:
**WO 2020/253332 (24.12.2020 Gazette 2020/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.06.2019  CN 201910541757**

(71) Applicants:
• **Nitto Denko (Shanghai Songjiang) Co., Ltd.**
**Shanghai 201613 (CN)**
• **NITTO DENKO CORPORATION**
**Ibaraki-shi**
**Osaka 567-8680 (JP)**

(72) Inventors:
• **LI, Xu**
**Shanghai 201613 (CN)**
• **TIAN, Song**
**Shanghai 201613 (CN)**
• **WATANABE, Yoshinori**
**Ibaraki-shi, Osaka 567--8680 (JP)**

(74) Representative: **Müller-Boré & Partner**
**Patentanwälte PartG mbB**
**Friedenheimer Brücke 21**
**80639 München (DE)**

(54) **POLYTETRAFLUOROETHYLENE THIN FILM AND MANUFACTURING METHOD THEREFOR**

(57)    Provided is a polytetrafluoroethylene film and a manufacturing method therefor. The polytetrafluoroethylene films of the present disclosure have excellent properties of high strength and a low shrinkage rate at high temperatures, and overcome the limitations on application of conventional polytetrafluoroethylene films on the market having both high strength and a high shrinkage rate, or both low strength and a low shrinkage rate. The polytetrafluoroethylene films of the present disclosure have good flatness, strong wear resistance, and high strength, and are capable of effectively suppressing thermal shrinkage. In addition, the manufacturing method for the polytetrafluoroethylene films of the present disclosure is simple, and has high production efficiency.

**EP 3 988 616 A1**

**Description**

**TECHNICAL FIELD**

The present disclosure relates to a polytetrafluoroethylene film, a manufacturing method for the polytetrafluoroethylene film, and an adhesive tape comprising the polytetrafluoroethylene film.

**BACKGROUND**

Various polytetrafluoroethylene (PTFE) films are known to be produced from PTFE by melt molding-cutting, or by extrusion molding-calendering. Those known PTFE films are extensively used in various fields, for example, used as substrates of adhesive tapes. However, the PTFE films obtained by melt molding-cutting or extrusion molding-calendering in the prior art cannot satisfy high strength and a low shrinkage rate at the same time. They are generally films having both a high strength and a high shrinkage rate, or both a low strength and a low shrinkage rate, which greatly limits the application and service life of the PTFE films.

**SUMMARY**

Technical Problem

Against the above background, the present disclosure is implemented. An objective of the present disclosure is to provide a PTFE film having both a high strength and a low shrinkage rate, a manufacturing method for the PTFE film, and an adhesive tape comprising the PTFE film. The PTFE films of the present disclosure not only have strong wear resistance and high strength, but are capable of suppressing high-temperature shrinkage. In addition, the manufacturing method for the PTFE films of the present disclosure is simple, and has high production efficiency.

Solution to Problem

As a result of extensive research, the present inventors have found that the above-mentioned problem can be addressed by allowing the machine direction (MD) tensile strength of the PTFE films and the machine direction (MD) thermal shrinkage rate after heating at 200°C for 30 min to be within specific ranges, thereby completing the present disclosure.
That is, the present disclosure is as follows:

[1] A polytetrafluoroethylene film, wherein the polytetrafluoroethylene film has machine direction (MD) tensile strength of 100 MPa or more, and has a thermal shrinkage rate in the machine direction (MD) of 10% or less after heating at 200°C for 30 min.
[2] The polytetrafluoroethylene film according to [1], wherein the polytetrafluoroethylene film has a thickness of from 15 to 150 $\mu$m.
[3] The polytetrafluoroethylene film according to [1] or [2], wherein the polytetrafluoroethylene film has a melting enthalpy of 25 kJ/kg or less.
[4] A method for manufacturing the polytetrafluoroethylene film according to any one of [1] to [3], comprising:

molding polytetrafluoroethylene powder to obtain a molded article;
cutting the molded article into a film to obtain a cutting film; and
calendering the cutting film at a temperature lower than a melting point of polytetrafluoroethylene to obtain a polytetrafluoroethylene film.

[5] The manufacturing method according to [4], wherein the cutting film has a thickness of from 30 to 300 $\mu$m.
[6] The manufacturing method according to [4] or [5], wherein a ratio of the thickness of the cutting film to the thickness of the polytetrafluoroethylene film, i.e., a ratio of the thickness of the cutting film before calendering to the thickness of the polytetrafluoroethylene film obtained after calendering, is from 5/1 to 1.5/1.
[7] The manufacturing method according to [6], wherein the calendering is completed in one step, or in two or more steps.
[8] The manufacturing method according to [4] or [5], wherein the cutting film is calendered at 230°C to 310°C.
[9] An adhesive tape, comprising, as a substrate, the polytetrafluoroethylene film according to any one of [1] to [3].
[10] An adhesive tape, comprising, as a substrate, a polytetrafluoroethylene film obtained by the manufacturing method according to any one of [4] to [8].

Effects of Invention

The PTFE films of the present disclosure not only can effectively suppress the thermal shrinkage while improving the film strength, but also have the advantages of excellent flatness, strong wear resistance, etc. The PTFE films of the present disclosure are thus particularly suitable for use in the high-temperature field. Besides, the manufacturing method for the PTFE films of the present disclosure is simple, and has high production efficiency.

## DETAILED DESCRIPTION

The machine direction (MD) tensile strength of the PTFE film of the present disclosure is 100 MPa or more, preferably from 100 to 200 MPa, further preferably from 130 to 200 MPa. By setting the MD tensile strength of the PTFE film within the above-mentioned range, the strength and impact resistance can be enhanced. When the MD tensile strength of the PTFE film is less than 100 MPa, the PTFE film is easily deformed or broken as a result of insufficient strength, which limits the application of the PTFE film. The term "machine direction (MD)" mentioned above refers generally to the longitudinal direction of the PTFE film.

It should be noted that "the machine direction (MD) tensile strength" is measured by the method described in the Examples of the present description.

The thermal shrinkage rate at 200°C is an indicator of the structural stability of the PTFE film at high temperatures. The lower the thermal shrinkage rate, the more stable the structure, and the more conducive to use of the film. In the present disclosure, the thermal shrinkage rate in the machine direction (MD) of the PTFE film after heating at 200°C for 30 min is 10% or less, preferably 7% or less, more preferably 5% or less. By setting the thermal shrinkage rate within the above-mentioned range, it is possible to suppress shrinkage of the PTFE film even at high temperatures, and to obtain the PTFE film with excellent structural stability. If the thermal shrinkage rate in the machine direction (MD) of the PTFE film after heating at 200°C for 30 min is greater than 10%, the effect of suppressing thermal shrinkage is insufficient, and the improved dimensional stability of the PTFE film cannot be achieved. The thermal shrinkage rate is measured by the method described in the Examples of the present description.

In the present disclosure, the PTFE film has a thickness of from 15 to 150 $\mu$m, preferably from 50 to 100 $\mu$m. When the thickness of the PTFE film falls within the above-mentioned range, it is possible to provide a PTFE film with high strength and strong wear resistance.

According to the present disclosure, the melting enthalpy of the PTFE film is 25 kJ/kg or less, preferably 22 kJ/kg or less. The melting enthalpy is a parameter for representing the degree of crystallinity. Studies have found that when the degree of crystallinity of the PTFE film decreases, the flexibility of the film will increase. If the melting enthalpy of the PTFE film is greater than 25 kJ/kg, the flexibility of the PTFE film is often caused to be poor. In the present disclosure, the term "melting enthalpy" refers to a melting enthalpy measured at a temperature ranging from 270 to 345°C.

According to another embodiment of the present disclosure, there is further provided a method for manufacturing a polytetrafluoroethylene film, comprising:

> molding polytetrafluoroethylene powder to obtain a molded article;
> cutting the molded article into a film to obtain a cutting film; and
> calendering the cutting film at a temperature lower than a melting point of polytetrafluoroethylene to obtain a polytetrafluoroethylene film.

The polytetrafluoroethylene powder is molded, and gas among polytetrafluoroethylene powder is eliminated, such that the polytetrafluoroethylene powder is melted and integrated to get a molded article. Within the scope of not impairing the effects of the present disclosure, the resulting molded articles may be processed into molded articles in various sizes, e.g., processed into cylinders in various sizes.

The polytetrafluoroethylene powder is not particularly limited, and commercially available polytetrafluoroethylene powder may be used. Depending upon manufacturing processes of manufacturers, the polytetrafluoroethylene powder may contain small amount of at least one of perfluoroalkoxy alkane (PFA), perfluorinated ethylene propylene copolymer (FEP), ethylene-tetrafluoroethylene copolymer (ETFE), and polyvinylidene difluoride (PVDF).

The temperature at which the polytetrafluoroethylene powder is molded is not particularly limited. The polytetrafluoroethylene powder is preferably molded at a temperature of 360 to 390°C. When the sintering temperature is too high, this will accelerate decomposition of PTFE, generating toxic gases.

The time for molding the polytetrafluoroethylene powder is not particularly limited, for example, it is generally from 10 h to 20 h. The molding time can also be appropriately adjusted according to the molding temperature.

The molding method is not particularly limited. For example, hydraulic press, sintering furnace, or the like may be used for molding.

The method for cutting into films is not particularly limited. For example, a precision CNC lathe may be used to cut molded articles resulting from molding into PTFE films in various thicknesses.

The thickness of the cutting film is from 30 to 500 $\mu$m, preferably from 30 to 300 $\mu$m, more preferably from 75 to 300 $\mu$m. When the thickness of the cutting film falls within the above-mentioned range, it is helpful for forming the PTFE films of the present disclosure having high strength while suppressing shrinkage. When the thickness of the cutting film is less than 30 $\mu$m, the machinability will be influenced. When the thickness of the cutting film is greater than 500 $\mu$m, the practicability of the PTFE films will be restricted.

In the present disclosure, when the cutting film is calendered at a temperature lower than the melting point of polytetrafluoroethylene, the temperature is one of the key indicators. The calendering temperature is not particularly limited as long as it is lower than the melting point of polytetrafluoroethylene. Preferably, the cutting film is calendered at 230 to 310°C. More preferably, the cutting film is calendered at 250 to 300°C. By setting the temperature within the above-mentioned range, it is possible to obtain PTFE films having both a high strength and a low shrinkage rate.

The speed at which the cutting film is calendered is not particularly limited, for example, it may be from 0.5 to 5 m/min. The calendering speed may also be properly adjusted according to the calendering temperature.

In the present disclosure, a ratio of the thickness of the cutting film to the thickness of the polytetrafluoroethylene film, i.e., a ratio of the thickness of the cutting film before calendering to the thickness of the polytetrafluoroethylene film obtained after calendering, is from 5/1 to 1.5/1, more preferably from 5/1 to 2/1, still more preferably from 4/1 to 2/1. By setting the thickness ratio within the above-mentioned range, PTFE films with high strength can be produced. If the thickness ratio is too high, the PTFE films will be prone to rupture defects and structural inhomogeneity. If the thickness ratio is too low, the strength of the PTFE films will be weak.

In the present disclosure, the calendering can be completed in one step, or in two or more steps, so as to achieve the desired ratio of the thickness of the cutting film to the thickness of the polytetrafluoroethylene film. Within the scope of not impairing the effects of the present disclosure, the process with a high thickness ratio may be disassembled into several processes with a low thickness ratio. For example, the cutting film may be calendered at a thickness ratio of 1.5/1, and thereafter calendered at a thickness ratio of 2/1, and the final ratio of the thickness of the cutting film and the thickness of the polytetrafluoroethylene film is 3/1.

The equipment for calendering is not particularly limited as long as it can meet the requirements for the calendering temperature and the thickness ratio of the present disclosure. For example, calendering rolls of various materials, high-precision mirror rolls, etc. may be used.

Within the scope of not impairing the effects of the present disclosure, the manufacturing method for the PTFE films of the present disclosure may include other steps, such as a pre-molding step, than the above-mentioned steps.

According to another aspect of the present disclosure, there is provided an adhesive tape, comprising, as a substrate, the PTFE film of the present disclosure, or comprising, as a substrate, a PTFE film obtained by the method for manufacturing the PTFE film of the present disclosure.

The PTFE films of the present disclosure can be used as substrates, and thus can be made into various adhesive tapes. For instance, the adhesive tape according to the present disclosure preferably includes the PTFE film as a substrate and an adhesive layer.

Within the scope of not impairing the effects of the present disclosure, the adhesive tapes of the present disclosure may be manufactured by any suitable method. Examples of the method may include a method of coating a composition as an adhesive layer forming material on a substrate to form an adhesive layer on the substrate. Examples of such a coating method may include roll coating, gravure coating, reverse coating, roll brushing, spray coating, air-knife coating, and extrusion coating with a die coater, and so on.

In addition, the PTFE film as the substrate may be further subjected to any suitable surface treatment according to the purpose. For instance, the substrate surface may be subjected to suitable known or conventional surface treatment, such as corona discharge treatment, plasma treatment, or primer treatment, and so on.

As the material of the adhesive layer, any suitable adhesive may be used within the scope of not impairing the effects of the present disclosure. Examples of the adhesive may include acrylic adhesives, rubber-based adhesives, silicone-based adhesives, and other adhesives conventionally used in adhesive layers of adhesive tapes. From the perspective of thermal resistance of adhesive tapes, it is preferable to use adhesive layers comprising silicone-based adhesives as a main component.

In the situation where a silicone-based adhesive is used in the above-mentioned adhesive layer, any suitable silicone-based adhesive can be used. As such a silicone-based adhesive, it is preferable to use an adhesive obtained by blending or agglomerating silicone resin (silicone-based polymer or silicone component).

In addition, examples of the above silicone-based adhesive may include addition curable silicone-based adhesives and peroxide curable silicone-based adhesives. Among these silicone-based adhesives, addition curable silicone-based adhesives are preferred from the perspectives of no use of peroxides (benzoyl peroxide, etc.) and no production of decomposition products.

Generally, the curing reaction of the addition curable silicone-based adhesives described above is, for example, a method for curing a polyalkylhydrosiloxane composition by a platinum catalyst under the condition that a polyalkyl silicone-based adhesive is obtained.

The thickness of the adhesive layer is not particularly limited, for example, preferably from 5 to 100 $\mu$m, more preferably from 10 to 60 $\mu$m.

**EXAMPLES**

The present disclosure will be described specifically below by way of examples. However, the present disclosure is not limited to the examples. Tests and evaluation methods in the examples, etc. are described below.

<MD Tensile Strength of PTFE Film>

In accordance with GB/T 1040.3-2006, the MD (longitudinal direction) tensile strength of the PTFE films produced in the Examples and Comparative Examples was measured by a tensile testing machine (manufactured by AG-X plus, SHIMADZU) at a tensile speed of 200 mm/min. The measurement results were shown in Tables 1 and 2.

<MD Tensile Strength of Adhesive Tape>

In accordance with GB/T 30776-2014, the MD (longitudinal direction) tensile strength of the adhesive tapes was measured by a tensile testing machine (manufactured by AG-X plus, SHIMADZU) at a tensile speed of 300 mm/min. The measurement results were shown in Table 2.

<Thermal Shrinkage Rate>

In accordance with GB/T 12027-2004, the PTFE films and adhesive tapes were cut into 120 mm $\times$ 120 mm film samples (test pieces) with a labeled length of 100 mm $\times$ 100 mm. The test pieces were placed in thermal environment at 200°C for 30 min, and then placed at room temperature for 30 min. A vernier caliper was used to measure the MD dimensions of the labeled areas of the test pieces before and after heating, and the thermal shrinkage rates were determined based on the following equation:

$$\text{thermal shrinkage rate (\%)} = [[\text{length before heating (mm)} - \text{length after heating (mm)}]/ \text{length before heating (mm)}] \times 100.$$

<Melting Enthalpy>

The melting enthalpy may be measured by the differential scanning calorimetry (DSC) according to GB/T 19466.3-2004. Specifically, the melting enthalpy was determined by a differential scanning calorimeter (DSC 8000, manufactured by PerkinElmer). The temperature was raised from room temperature to 380°C at 20°C/min, and then lowered to room temperature at 20°C/min. Based on the thermogram during temperature increase, the melting enthalpy of the PTFE film was measured according to GB/T 19466.3-2004.

<Evaluations on Thermal Shrinkage of PTFE films and Adhesive Tapes>

If the MD thermal shrinkage rates of the PTFE films and adhesive tapes were greater than 10%, the thermal shrinkage was evaluated as "$\times$".
If the MD thermal shrinkage rates of the PTFE films and adhesive tapes were greater than 7% and 10% or less, the thermal shrinkage was evaluated as "$\Delta$".
If the MD thermal shrinkage rates of the PTFE films and adhesive tapes were greater than 5% and 7% or less, the thermal shrinkage was evaluated as "O".
If the MD thermal shrinkage rates of the PTFE films and adhesive tapes were 5% or less, the thermal shrinkage was evaluated as "◎".

<Evaluation on Fracture Resistance of PTFE Films>

If the MD tensile strength of the PTFE films was less than 100 MPa, the fracture resistance was evaluated as "$\times$".
If the MD tensile strength of the PTFE films was 100 MPa or more and 130 MPa or less, the fracture resistance was evaluated as "O".

If the MD tensile strength of the PTFE films was greater than 130 MPa and 200 MPa or less, the fracture resistance was evaluated as "◎".

<Evaluation on Fracture Resistance of Adhesive Tapes>

If the MD tensile strength of the adhesive tapes was less than 60 N/cm, the fracture resistance was evaluated as "×".

If the MD tensile strength of the adhesive tapes was 60 N/cm or more and 80 N/cm or less, the fracture resistance was evaluated as "O".

If the MD tensile strength of the adhesive tapes was greater than 80 N/cm and 120 N/cm or less, the fracture resistance was evaluated as "◎".

**Example 1**

In a sintering furnace, PTFE powder (62X, manufactured by DuPont) was molded at 380°C for 15 h to produce a molded article. Then, the resulting molded article was cut on a precision CNC lathe to obtain cutting films with a thickness of 180 $\mu$m. Next, the resulting cutting films were calendered at 240°C by a calender at a calendering speed of 1.5 m/min to obtain PTFE films having a thickness of 60 $\mu$m. The ratio of the thickness of the cutting film to the thickness of the PTFE film, i.e., the ratio of the thickness of the cutting film before calendering to the thickness of the PTFE film obtained after calendering, was 3/1.

**Example 2**

In a sintering furnace, PTFE powder (62X, manufactured by DuPont) was molded at 380°C for 15 h to produce a molded article. Then, the resulting molded article was cut on a precision CNC lathe to obtain cutting films with a thickness of 240 $\mu$m. Next, the resulting cutting films were calendered at 240°C by a calender at a calendering speed of 1.5 m/min to obtain PTFE films having a thickness of 60 $\mu$m. The ratio of the thickness of the cutting film to the thickness of the PTFE film, i.e., the ratio of the thickness of the cutting film before calendering to the thickness of the PTFE film obtained after calendering, was 4/1.

**Example 3**

In a sintering furnace, PTFE powder (62X, manufactured by DuPont) was molded at 380°C for 15 h to produce a molded article. Then, the resulting molded article was cut on a precision CNC lathe to obtain cutting films with a thickness of 240 $\mu$m. Next, the resulting cutting films were calendered at 260°C by a calender at a calendering speed of 1.5 m/min to obtain PTFE films having a thickness of 60 $\mu$m. The ratio of the thickness of the cutting film to the thickness of the PTFE film, i.e., the ratio of the thickness of the cutting film before calendering to the thickness of the PTFE film obtained after calendering, was 4/1.

**Example 4**

In a sintering furnace, PTFE powder (62X, manufactured by DuPont) was molded at 380°C for 15 h to produce a molded article. Then, the resulting molded article was cut on a precision CNC lathe to obtain cutting films with a thickness of 300 $\mu$m. Next, the resulting cutting films were calendered at 300°C by a calender at a calendering speed of 1.5 m/min to obtain PTFE films having a thickness of 60 $\mu$m. The ratio of the thickness of the cutting film to the thickness of the PTFE film, i.e., the ratio of the thickness of the cutting film before calendering to the thickness of the PTFE film obtained after calendering, was 5/1.

**Comparative Example 1**

In a sintering furnace, PTFE powder (62X, manufactured by DuPont) was molded at 380°C for 15 h to produce a molded article. Then, the resulting molded article was cut on a precision CNC lathe to obtain cutting films with a thickness of 240 $\mu$m. Next, the resulting cutting films were calendered at 150°C by a calender at a calendering speed of 1.5 m/min to obtain PTFE films having a thickness of 60 $\mu$m. The ratio of the thickness of the cutting film to the thickness of the PTFE film, i.e., the ratio of the thickness of the cutting film before calendering to the thickness of the PTFE film obtained after calendering, was 4/1.

**Comparative Example 2**

In a sintering furnace, PTFE powder (62X, manufactured by DuPont) was molded at 380°C for 15 h to produce a molded article. Then, the resulting molded article was cut on a precision CNC lathe to obtain cutting films with a thickness of 90 $\mu$m. Next, the resulting cutting films were calendered at 150°C by a calender at a calendering speed of 1.5 m/min to obtain PTFE films having a thickness of 60 $\mu$m. The ratio of the thickness of the cutting film to the thickness of the PTFE film, i.e., the ratio of the thickness of the cutting film before calendering to the thickness of the PTFE film obtained after calendering, was 1.5/1.

**Example 5**

In a sintering furnace, PTFE powder (62X, manufactured by DuPont) was molded at 380°C for 15 h to produce a molded article. Then, the resulting molded article was cut on a precision CNC lathe to obtain cutting films with a thickness of 180 $\mu$m. Next, the resulting cutting films were calendered at 240°C by a calender at a calendering speed of 1.5 m/min to obtain PTFE films having a thickness of 60 $\mu$m. The ratio of the thickness of the cutting film to the thickness of the PTFE film, i.e., the ratio of the thickness of the cutting film before calendering to the thickness of the PTFE film obtained after calendering, was 3/1.
The PTFE films obtained above was used as a substrate, on which silica gel (DOWSIL™ 7657 Adhesive, manufactured by Dow) was coated to form an adhesive layer with a thickness of 30 $\mu$m, thereby obtaining an adhesive tape.

**Example 6**

In a sintering furnace, PTFE powder (62X, manufactured by DuPont) was molded at 380°C for 15 h to produce a molded article. Then, the resulting molded article was cut on a precision CNC lathe to obtain cutting films with a thickness of 240 $\mu$m. Next, the resulting cutting films were calendered at 260°C by a calender at a calendering speed of 1.5 m/min to obtain PTFE films having a thickness of 60 $\mu$m. The ratio of the thickness of the cutting film to the thickness of the PTFE film, i.e., the ratio of the thickness of the cutting film before calendering to the thickness of the PTFE film obtained after calendering, was 4/1.
The PTFE films obtained above was used as a substrate, on which silica gel (DOWSIL™ 7657 Adhesive, manufactured by Dow) was coated to form an adhesive layer with a thickness of 30 $\mu$m, thereby obtaining an adhesive tape.

**Example 7**

In a sintering furnace, PTFE powder (62X, manufactured by DuPont) was molded at 380°C for 15 h to produce a molded article. Then, the resulting molded article was cut on a precision CNC lathe to obtain cutting films with a thickness of 300 $\mu$m. Next, the resulting cutting films were calendered at 300°C by a calender at a calendering speed of 1.5 m/min to obtain PTFE films having a thickness of 60 $\mu$m. The ratio of the thickness of the cutting film to the thickness of the PTFE film, i.e., the ratio of the thickness of the cutting film before calendering to the thickness of the PTFE film obtained after calendering, was 5/1.
The PTFE films obtained above was used as a substrate, on which silica gel (DOWSIL™ 7657 Adhesive, manufactured by Dow) was coated to form an adhesive layer with a thickness of 30 $\mu$m, thereby obtaining an adhesive tape.

**Table 1**

| | PTFE Film | | MD Tensile Strength of PTFE Film (MPa) | MD Thermal Shrinkage Rate of PTFE Film (%) | Melting Enthalpy (kJ/kg) | Calendering Temp. (°C) | Thickness Ratio of Cutting Film to PTFE Film | Fracture Resistance ofPTFE Film | Thermal Shrinkage of PTFE Film |
| | Ingredient | Thickness (μm) | | | | | | | |
|---|---|---|---|---|---|---|---|---|---|
| Ex. 1 | PTFE | 60 | 122 | 8 | 24 | 240 | 3:1 | ○ | △ |
| Ex. 2 | PTFE | 60 | 147 | 9 | 23 | 240 | 4:1 | ◎ | △ |
| Ex. 3 | PTFE | 60 | 156 | 6 | 21 | 260 | 4:1 | ◎ | ○ |
| Ex. 4 | PTFE | 60 | 194 | 3 | 20 | 300 | 5:1 | ◎ | ◎ |
| Comp . Ex. 1 | PTFE | 60 | 130 | 15 | 25 | 150 | 4:1 | ○ | × |
| Comp . Ex. 2 | PTFE | 60 | 58 | 8 | 27 | 150 | 1.5:1 | × | △ |

**Table 2**

| | PTFE Films | | Adhesive Layer | | MD Tensile Strength of PTFE Film (MPa) | MD Thermal Shrinkage Rate of PTFE Film (%) | Melting Enthalpy (kJ/kg) | Calendering Temp. (°C) | Thickness Ratio of Cutting Film to PTFE Film | MD Tensile Strength of Adhesive Tape (N/cm) | Fracture Resistance of Adhesive Tape | Thermal Shrinkage of Adhesive Tape |
|---|---|---|---|---|---|---|---|---|---|---|---|---|
| | Ingredient | Thickness (μm) | Adhesive | Thickness (μm) | | | | | | | | |
| Ex. 5 | PTFE | 60 | Silica gel | 30 | 122 | 8 | 24 | 240 | 3:1 | 74 | O | △ |
| Ex. 6 | PTFE | 60 | Silica gel | 30 | 156 | 6 | 21 | 260 | 4:1 | 95 | ◎ | ○ |
| Ex. 7 | PTFE | 60 | Silica gel | 30 | 194 | 3 | 20 | 300 | 5:1 | 115 | ◎ | ◎ |

As shown above, by controlling the machine direction (MD) tensile strength of the PTFE films and the thermal shrinkage rate in the machine direction (MD) after heating at 200°C for 30 min within specific ranges, not only could the strength of the PTFE films be improved, but the thermal shrinkage could be effectively suppressed, thereby obtaining PTFE films having both a high strength and a low thermal shrinkage rate. As such, the PTFE films of the present disclosure were particularly suitable for use in the high-temperature field.

On the contrary, in Comparative Examples 1 and 2, since either of the machine direction (MD) tensile strength of the PTFE films and the thermal shrinkage rate in the machine direction (MD) after heating at 200°C for 30 min was out of the corresponding range of the present disclosure, the strength or thermal shrinkage of the resulting PTFE films was poor, so it was impossible to obtain PTFE films having a both high strength and a low thermal shrinkage rate.

**Claims**

1. A polytetrafluoroethylene film, wherein the polytetrafluoroethylene film has machine direction (MD) tensile strength of 100 MPa or more, and has a thermal shrinkage rate in the machine direction (MD) of 10% or less after heating at 200°C for 30 min.

2. The polytetrafluoroethylene film according to claim 1, wherein the polytetrafluoroethylene film has a thickness of from 15 to 150 $\mu$m.

3. The polytetrafluoroethylene film according to claim 1 or 2, wherein the polytetrafluoroethylene film has a melting enthalpy of 25 kJ/kg or less.

4. A method for manufacturing the polytetrafluoroethylene film according to any one of claims 1 to 3, comprising:

   molding polytetrafluoroethylene powder to obtain a molded article;
   cutting the molded article into a film to obtain a cutting film; and
   calendering the cutting film at a temperature lower than a melting point of polytetrafluoroethylene to obtain a polytetrafluoroethylene film.

5. The manufacturing method according to claim 4, wherein the cutting film has a thickness of from 30 to 300 $\mu$m.

6. The manufacturing method according to claim 4 or 5, wherein a ratio of the thickness of the cutting film to the thickness of the polytetrafluoroethylene film, i.e., a ratio of the thickness of the cutting film before calendering to the thickness of the polytetrafluoroethylene film obtained after calendering, is from 5/1 to 1.5/1.

7. The manufacturing method according to claim 6, wherein the calendering is completed in one step, or in two or more steps.

8. The manufacturing method according to claim 4 or 5, wherein the cutting film is calendered at 230°C to 310°C.

9. An adhesive tape, comprising, as a substrate, the polytetrafluoroethylene film according to any one of claims 1 to 3.

10. An adhesive tape, comprising, as a substrate, a polytetrafluoroethylene film obtained by the manufacturing method according to any one of claims 4 to 8.

**EP 3 988 616 A1**

## INTERNATIONAL SEARCH REPORT

| | International application No. |
|---|---|
| | **PCT/CN2020/083896** |

**A. CLASSIFICATION OF SUBJECT MATTER**

C08L 27/18(2006.01)i; C08J 5/18(2006.01)i; C09J 7/20(2018.01)i; B29D 7/00(2006.01)i; B29L 7/00(2006.01)i; B29C 67/04(2017.01)i; B29C 43/46(2006.01)i; B23Q 15/08(2006.01)i; B29C 55/02(2006.01)i

According to International Patent Classification (IPC) or to both national classification and IPC

**B. FIELDS SEARCHED**

Minimum documentation searched (classification system followed by classification symbols)

C08L; C08J; C09J; B29D; B29L; B29C; B23Q

Documentation searched other than minimum documentation to the extent that such documents are included in the fields searched

Electronic data base consulted during the international search (name of data base and, where practicable, search terms used)

CNABS; CNTXT; CJFD; VEN; USTXT; EPTXT; WOTXT; CNKI: 超星读秀: 日东电工, 李旭, 田松, 渡边義宣, 聚四氟乙烯, 特氟龙, 特富龙, 铁氟龙, 特富龙, 德氟隆, PTFE, 拉伸强度, 热收缩率, 粉末, 烧结, 成型, 切削, 车削, 压延, 延压, 流延, 延流, 平整度, 耐磨, 膜, 基材, 胶带, 胶片, polytetrafluoroethylene, teflon, tensile strength, stretch+, thermal+ contract+, heat+ shrink+, powder?, sinter+, form+, cut+, calender+, calendar+, cast+, flat+, smooth+, wear 3w resistance, abrasion 3w resistance, substrate, sheet?, tape?, film

**C. DOCUMENTS CONSIDERED TO BE RELEVANT**

| Category* | Citation of document, with indication, where appropriate, of the relevant passages | Relevant to claim No. |
|---|---|---|
| X | CN 101491945 A (GUANGZHOU CITY DONGHONG PLASTIC PRODUCTS CO., LTD.) 29 July 2009 (2009-07-29) description page 1, line 13 to page 2, line 23 | 1-10 |
| X | CN 106042411 A (TAIZHOU YAXING PLASTIC INDUSTRY CO., LTD.) 26 October 2016 (2016-10-26) description, paragraphs [0004]-[0016] | 1-10 |
| X | CN 107599461 A (ZHENJIANG CHUNHUAN SEALING MATERIALS CO., LTD.) 19 January 2018 (2018-01-19) description, paragraphs [0004] and [0005] | 1-10 |
| X | CN 105666889 A (TIANJIN TIANSU SCIENCE & TECHNOLOGY GROUP CO., LTD.) 15 June 2016 (2016-06-15) description, paragraphs [0005]-[0027] | 1-3, 9, 10 |
| X | CN 103867716 A (HUZHOU SENNUO FLUORINE MATERIAL TECHNOLOGY CO., LTD.) 18 June 2014 (2014-06-18) description, paragraphs [0003]-[0009] | 1-3, 9, 10 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **31 May 2020** | **30 June 2020** |

| Name and mailing address of the ISA/CN | Authorized officer |
|---|---|
| **China National Intellectual Property Administration (ISA/CN) No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

11

**INTERNATIONAL SEARCH REPORT**

| International application No. |
|---|
| **PCT/CN2020/083896** |

**C.    DOCUMENTS CONSIDERED TO BE RELEVANT**

| Category* | Citation of document, with indication, where appropriate, of the relevant passages | Relevant to claim No. |
|---|---|---|
| X | JP 2002370279 A (NITTO DENKO CORP) 24 December 2002 (2002-12-24) <br> description, paragraphs [0009]-[0016] | 1-3, 9, 10 |
| X | US 5474727 A (AXON CABLE SA) 12 December 1995 (1995-12-12) <br> claims 1-10 | 1-3, 9, 10 |
| X | WO 2012026401 A1 (UNIV GUNMA NAT UNIV CORP et al.) 01 March 2012 (2012-03-01) <br> claims 1-15 | 1-3, 9, 10 |
| A | CN 106700350 A (ZHEJIANG LANTIAN ENVIRONMENTAL PROTECTION HI-TECH CO., LTD. et al.) 24 May 2017 (2017-05-24) <br> entire document | 1-10 |

Form PCT/ISA/210 (second sheet) (January 2015)

**INTERNATIONAL SEARCH REPORT**
Information on patent family members

International application No.

**PCT/CN2020/083896**

| Patent document cited in search report | | | Publication date (day/month/year) | Patent family member(s) | | | Publication date (day/month/year) |
|---|---|---|---|---|---|---|---|
| CN | 101491945 | A | 29 July 2009 | CN | 101491945 | B | 29 December 2010 |
| CN | 106042411 | A | 26 October 2016 | None | | | |
| CN | 107599461 | A | 19 January 2018 | None | | | |
| CN | 105666889 | A | 15 June 2016 | None | | | |
| CN | 103867716 | A | 18 June 2014 | None | | | |
| JP | 2002370279 | A | 24 December 2002 | JP | 4817276 | B2 | 16 November 2011 |
| US | 5474727 | A | 12 December 1995 | FR | 2677919 | A1 | 24 December 1992 |
| | | | | JP | H06511268 | A | 15 December 1994 |
| | | | | WO | 9300213 | A1 | 07 January 1993 |
| | | | | EP | 0590002 | A1 | 06 April 1994 |
| | | | | EP | 0590002 | B1 | 28 February 1996 |
| | | | | DE | 69208661 | D1 | 04 April 1996 |
| WO | 2012026401 | A1 | 01 March 2012 | US | 9440382 | B2 | 13 September 2016 |
| | | | | JP | 5633793 | B2 | 03 December 2014 |
| | | | | JP | 2012045812 | A | 08 March 2012 |
| | | | | US | 2013158220 | A1 | 20 June 2013 |
| CN | 106700350 | A | 24 May 2017 | None | | | |

Form PCT/ISA/210 (patent family annex) (January 2015)